# NEW EUROPEAN PATENT SPECIFICATION

(11) **EP 2 962 790 B2**
(45) Date of publication and mention of the opposition decision: **29.10.2025**
(45) Mention of the grant of the patent: 25.08.2021
(21) Application number: 15175345.6
(22) Date of filing: 03.07.2015
(51) Int. Cl.: B22F 5/00, B29C 64/393, F23R 3/28, B22F 5/10, B22F 3/105, B33Y 80/00, B33Y 10/00, B22F 10/28

(54) **ADDITIVELY MANUFACTURED TUBE ASSEMBLY**
PER ADDITIVE FERTIGUNG HERGESTELLTE ROHRANORDNUNG
ENSEMBLE DE TUBE FABRIQUÉ DE MANIÈRE ADDITIVE

(30) Priority: 03.07.2014 US 201462020715 P
(43) Date of publication of application: 06.01.2016
(73) Proprietor: RTX Corporation, Farmington, CT 06032 (US)
(72) Inventor: OTT, Joe, Enfield, CT Connecticut 06082 (US); RUP, John J., Willington, CT Connecticut 06279 (US); STEMPINSKI, Shawn, Simsbury, CT Connecticut 06070 (US); FUNK, Stanley J., Southington, CT Connecticut 06489 (US); MOURA, Dennis M., South Windsor, CT Connecticut 06074 (US); DAUTOVA, Lyutsia, Rocky Hill, CT Connecticut 06067 (US); COFFEY, Roger O., Glastonbury, CT Connecticut 06033 (US)
(74) Representative: Dehns

(56) References cited:
- EP-A1- 2 837 445
- EP-A1- 2 902 605
- EP-A2- 2 226 559
- EP-A2- 2 846 090
- WO-A2-2009/039142
- WO-A2-2010/045011
- GB-A- 2 416 319
- GB-A- 2 440 546
- US-A1- 2009 255 262
- US-A1- 2011 247 590
- US-B2- 8 096 135

## Description

### BACKGROUND

The present disclosure relates to a tube assembly, and more particularly to an additive manufactured tube assembly.

Manufacturing of tube assemblies such as those containing tubes within tubes (or concentrically located tubes), as one example, require the manufacture of several individual parts then assembly to create the final product. In some examples, air within an annular void defined between the two concentrically located tubes acts as a thermal insulator for fluid that may be flowing through the inner tube. Sealing of this void (i.e. complete encapsulation) to enhance the thermal properties of the surrounding air is difficult from a manufacturing perspective and not typically accomplished, and if such were accomplished, it would require yet further parts thus limiting feasibility.

There exist needs in various industries to reduce the number of manufactured parts for tube or conduit-like assemblies, thereby providing more robust and simpler designs requiring less maintenance, reducing manufacturing time and costs, improving thermal barrier characteristics, and/or reducing thermal conduction paths between inner and outer tubes of the assemblies, amongst others.

US 2011/247590 discloses a prior art method of manufacturing a tube assembly.

GB 2 440 546 discloses a prior art fluid carrying arrangement.

EP 2 837 445 discloses a prior art object production method.

WO 2010/045011 A2, US 2009/255262 A1, EP 2226559 A1 and EP 2902605 A1 disclose other prior art systems.

### SUMMARY

According to the invention, there is provided a fuel nozzle as set forth in claim 1.

In the alternative or additionally thereto, in the foregoing embodiment, the first tube is substantially concentric to the second tube.

In the alternative or additionally thereto, in the foregoing embodiment, the first and second tubes co-extend along a centerline having at least one bend.

The foregoing features and elements may be combined in various combinations without exclusivity, unless expressly indicated otherwise. These features and elements as well as the operation thereof will become more apparent in-light of the following description and the accompanying drawings. It should be understood; however, that the following description and figures are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a cross section of a combustor of a gas turbine engine illustrating a fuel nozzle as an example of a tube assembly;
FIG. 2 is a cross section of the tube assembly;
FIG. 3 is a partial cross section of a second example of a tube assembly;
FIG. 4 is a partial cross section of an embodiment of a tube assembly;
FIG. 5 is a partial cross section of another embodiment of a tube assembly; and
FIG. 6 is a schematic of an additive manufacturing system used to manufacture the tube assembly.

### DETAILED DESCRIPTION

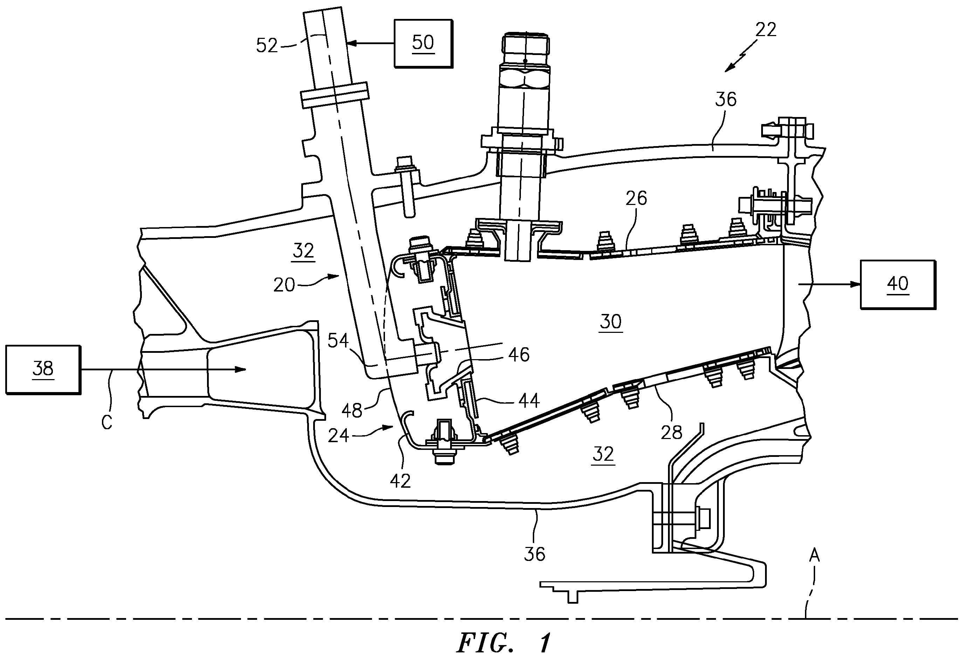

FIG. 1 illustrates a fuel nozzle for a gas turbine engine comprising an additive manufactured tube assembly 20. The fuel nozzle 20 is part of a combustor 22 that may be annular in shape and concentrically disposed to an engine axis A. The combustor 22 may further include a bulkhead assembly 24, an outer wall 26, an inner wall 28, and a diffuser case module 34. The outer and inner walls 26, 28 project axially in a downstream direction from the bulkhead assembly 24, and radially define an annular combustion chamber 30 therebetween. An annular cooling plenum 32 is generally defined radially between the outer diffuser case module 34 and a diffuser inner case 36 of the engine. The bulkhead assembly 24 and walls 26, 28 are located in the cooling plenum 32 immediately downstream from a compressor section 38, and upstream from a turbine section 40 of the engine.

The annular bulkhead assembly 24 may extend radially between and is secured to the forward most ends of the walls 26, 28. Assembly 24 generally includes an annular hood 42, a wall or heat shield 44 that defines the axial upstream end of the combustion chamber 30, and a plurality of swirlers 46 (one shown) spaced circumferentially about engine axis A and generally projecting or communicating through the wall 44. A plurality of circumferentially distributed hood ports 48 accommodate a respective plurality of the fuel injectors or nozzles 20 as well as direct compressed air C into the forward end of the combustion chamber 30 through the associated swirler 46.

The bulkhead assembly 24 introduces core combustion air into the upstream end of the combustion chamber 30 while dilution and cooling air is introduced into the combustion chamber 30 through the walls 26, 28 and from the plenum 32. The plurality of fuel nozzles 20 and respective swirlers 46 facilitate the generation of a blended fuel-air mixture that supports combustion in the combustion chamber 30.

Each fuel nozzle 20 may receive fuel from at least one fuel manifold 50 generally located radially outward of the case module 34. The elongated fuel nozzle 20 may substantially extend longitudinally along a centerline 52 and in a radial inward direction with respect to the engine axis A, through the case module 34 and into the plenum 32. The centerline 52 and thus the nozzle 20 then bends (i.e. see bend 54) and projects in an axial downstream direction, extending through the hood port 48 and into the swirler 46 where fuel is then dispensed and atomized from the nozzle 20.

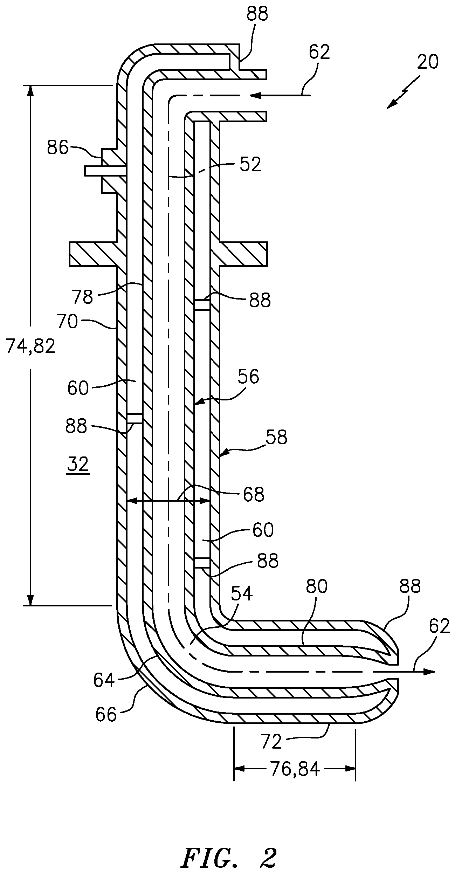

Referring to FIG. 2, the tube assembly 20 (i.e. a simplified fuel nozzle) has a first or inner tube 56 co-extending with and surrounded by (e.g. concentrically located) to a second or outer tube 58. The outer tube 58 is spaced radially outward from the inner tube 56 thereby defining a substantially annular void 60, there-between. Void 60 is sealed (i.e. completely encapsulated) from the plenum 32 and/or surrounding environment to act as a thermal insulator for any fluid (see arrow 62) flowing through the inner tube 56. To enhance the thermal insulating properties, the void 60 is under a negative atmospheric pressure and may further contain an inert gas such as nitrogen (N₂), Argon or any other gas compatible with the material composition of the surrounding structures. Although liquid fuel in the present example, it is contemplated and understood that the fluid 62 may also be a gas, liquid such as oil and water, or even a solid material (e.g. powder) capable of flow. It is further understood that the term "tube" also refers to conduits, casings, pipes and other structures capable of fluid flow and/or encasement of a thermal insulating gas.

Such fuel nozzles 20 flowing liquid fuel and operating in hot environments like the plenum 32 where temperatures may exceed 1,700 degrees Fahrenheit (927 degrees Celsius) are susceptible to fuel varnishing and coking due to high temperatures of more traditional fluid bearing tube(s). This coking can lead to decreased flow capacity of the nozzle and decreased quality of fuel delivery. To manage the temperature of the tube 56 and thus the fluid or fuel 62 and prevent coking, the void 60 is employed to break the thermal conduction path from the hot external environment to the inner tube 56. It is further contemplated and understood that other portions of a fuel delivery system of the gas turbine engine may employ the same type of assembly 20. For instance, the fuel manifold 50 may be susceptible to similar coking issues leading to unintentional mal-distribution of fuel in the system, and thus benefit from the same means of insulating a tube bearing fluid flow.

The inner and outer tubes 56, 58 may each have at least one respective bend 64, 66 that generally corresponds with the bend(s) 54 of the centerline 52 and such that the void 60 is generally maintained (i.e. spacing between tubes). The bends 64, 66 may be such where longitudinal insertion of the inner tube 56 into the outer tube 58 (and if the tubes were separate pieces) is not possible. With such fitting difficulties, additive manufacturing the tubes 56, 58 generally together and/or simultaneously is advantageous. As an example of such insertion difficulties that the additive manufacturing process resolves, the outer tube 58 may be lacking any line-of-site through the tube and the inner tube 56 is too large to freely fit completely into the outer tube 58. More specifically, the outer tube 58 may have an inner diameter (see arrow 68) and two substantially straight portions 70, 72 projecting outward from respective opposite ends of the bend 66. The straight portions 70, 72 and have respective longitudinal lengths (see respective arrows 74, 76) that are substantially longer than the inner diameter 68. The inner tube 56 may similarly have substantially straight portions 78, 80 projecting outward from respective ends of the bend 64. The straight portions 78, 80 may have respective longitudinal lengths (see respective arrows 82, 84) that are each longer than the inner diameter 68 of the outer tube 58. In such a dimensional relationship, fitting of the inner tube 56 into the outer tube 58 may be difficult if not impossible. Alternatively, each tube may have multiple bends along the centerline 52 that may be directed in different directions, this multiple bend configuration would also make fitting or insertion of the inner tube 56 into the outer tube 58 difficult, if not impossible.

The fuel nozzle 20 further has a pressure release or maintenance feature 86 supported by and communicating through the outer tube 58 for creating and maintaining the vacuum or negative atmospheric pressure in the void 60. The feature 86 may further assist in restoring the vacuum after a repair procedure or rupture of the outer tube 58. The feature 86 may be additive manufactured as one unitary piece to the assembly or may be adhered and/or brazed to the outer wall 58 after additive manufacturing is completed. The negative atmospheric pressure may be about three pounds per square inch (21 kPa).

The fuel nozzle 20 includes at least one support structure 88 for properly locating the inner tube 56 with respect to the outer tube 58. The support structure 88 may be generally located at one or both of the distal ends of the fuel nozzle 20 (e.g. the distal joinder of the inner tube 56 to the outer tube 58. The support structure 88 is a plurality of pylons that traverse the void 60 and connect the inner tube 56 to the outer tube 58. Such pylons are spaced axially and circumferentially with respect to the centerline 52, are additively manufactured as one unitary piece to both of the tubes 56, 58, and are minimal in mass to limit thermal conduction from the outer tube to the inner tube. The number of pylons are dictated by the structural needs of the fuel nozzle or assembly 20 and may be about 0.004 inches (0.102 millimeters) in diameter, or the minimal production capability of the additive manufacturing process.

The tube assembly 20 is additive manufactured as one unitary and homogenous piece. Material compositions include, but are not limited to, nickel (e.g. INCONEL 718, 625), Waspaloy^{®} (of United Technologies Corporation), Stellite^{®} (of the Deloro Stellite Company), titanium, steels and stainless steels, cobalt, chrome, Hastalloy^{®}X (of Haynes International Corporation), and others.

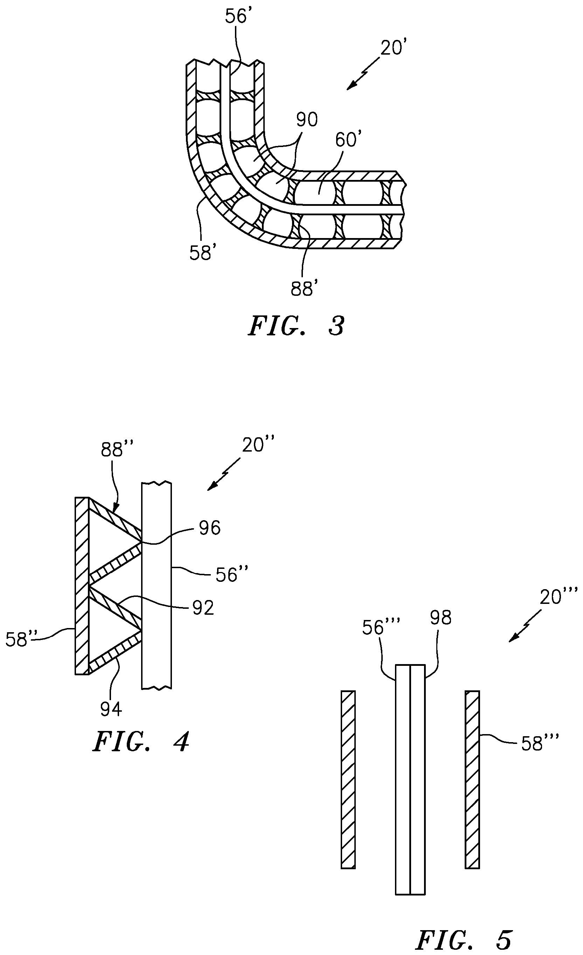

Referring to FIG. 3, a tube assembly is illustrated which falls outside the scope of the claims, wherein like elements have like identifying numerals except with the addition of a prime symbol. The tube assembly 20' has a support structure 88' that is generally of a honeycomb orientation. The honeycomb may function to divide the annular void 60' into a plurality of individually sealed void portions 90. It is further contemplated and understood that use of the term "honeycomb" may include a vascular and/or lattice structure, strut configurations, and/or a generally porose material. Yet further, the density of the honeycomb may be increased where additional support strength is needed. The supports may also be solid or organic in shape.

Referring to FIG. 4, an embodiment of a tube assembly is illustrated wherein like elements have like identifying numerals except with the addition of a double prime symbol. The tube assembly 20" of the embodiment has a support structure 88' that is girder-like. That is, a plurality of pylons may be paired such that the ends of two pylons 92, 94 and the inner tube 56 connect to one-another at a junction 96 and the opposite ends of the respective pylons 92, 94 are spaced from one-another and individually connect to the outer tube 58. In this way, minimal contact is made with the inner tube 56, thereby reducing thermal conduction.

Referring to FIG. 5, a tube assembly according to the invention is illustrated wherein like elements have like identifying numerals except with the addition of a triple prime symbol. The tube assembly 20'" includes a third tube 98 that co-extends with a first tube 56'" and is surrounded by and radially spaced inward from an outer tube 58'". All three tubes are additive manufactured together and/or simultaneously to simplify assembly and reduce the number of assembly parts.

Examples of additive manufacturing processes include, but are not limited to, laser powder bed, electron beam melting, free form fabrication laser powder deposition and electron beam wire deposition, amongst others. Additive manufacturing systems include, for example, Additive Layer Manufacturing (ALM) devices, such as Direct Metal Laser Sintering (DMLS), Selective Laser Melting (SLM), Laser Beam Melting (LBM) and Electron Beam Melting (EBM) that provide for the fabrication of complex metal, alloy, polymer, ceramic and composite structures by the freeform construction of the workpiece, layer-by-layer. The principle behind additive manufacturing processes may involve the selective melting of atomized precursor powder beds by a directed energy source, producing the lithographic build-up of the workpiece. The melting of the powder occurs in a small localized region of the energy beam, producing small volumes of melting, called melt pools, followed by rapid solidification, allowing for very precise control of the solidification process in the layer-by-layer fabrication of the workpiece. These devices are directed by three-dimensional geometry solid models developed in Computer Aided Design (CAD) software systems.

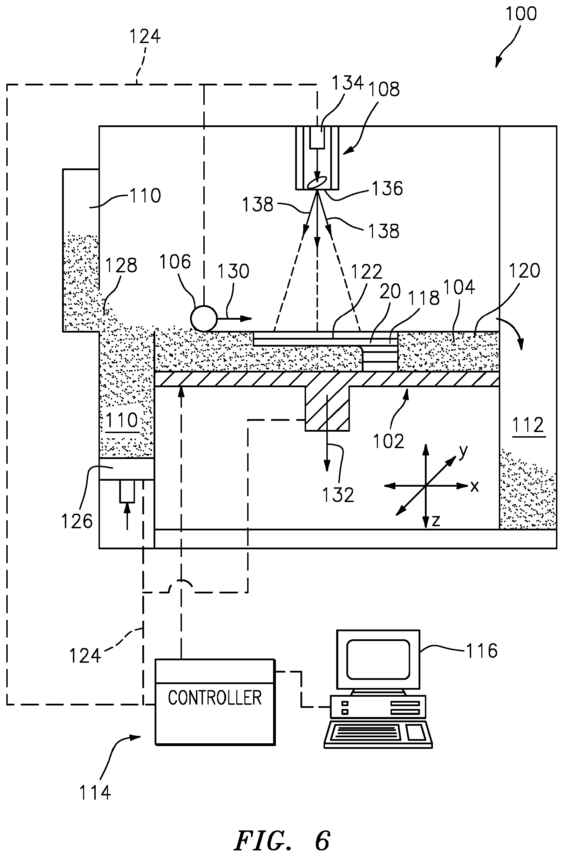

One example of an additive manufacturing system 100 capable of manufacturing the tube assembly 20 is schematically illustrated in FIG. 6. The additive manufacturing system 100 has a build table 102 for supporting the assembly 20 and generally holding a powder bed 104, a particle spreader, wiper or sprayer 106 for spreading, spraying or otherwise placing the powder bed 104 over the manufacture portion of the assembly 20 and build table 102, an energy gun 108 for selectively melting regions of a layer of the powder bed, a powder supply hopper 110 for supplying powder to the spreader 106, and a powder surplus hopper 112. The additive manufacturing system 100 may be constructed to build the assembly 20, or any portions thereof, in a layer-by-layer fashion. The powder bed 104 is composed of the same material composition as the assembly being additively manufactured.

A controller 114 of the additive manufacturing system 100 may include a computer 116 for entering data and that contains software for programming automated functions in accordance with inputted three dimensional computer aided design models of the assembly 20. The model may include a breakdown of the assembly 20 into a plurality of slices 118 additively built atop one-another generally in a vertical or z-coordinate direction. Each solidified slice 118 corresponds to a layer 120 of the powder bed 104 prior to solidification and each layer 120 is placed on top of a build surface 122 of the previously solidified slice 118. The controller 114 generally operates the entire system through a series of electrical and/or digital signals 124 sent to the system 100 components. For instance, the controller 114 may send a signal 124 to a mechanical piston 126 of the supply hopper 110 to push a supply powder 128 upward for receipt by the spreader 106. The spreader 106 may be a wiper, roller or other device that pushes (see arrow 130) or otherwise places the supply powder 128 over the build surface 122 of the assembly 20 (or any portion thereof) by a pre-determined thickness that may be established through downward movement (see arrow 132) of the build table 102 controlled by the controller 114. Any excess powder 128 may be pushed into the surplus hopper 112 by the spreader 106.

Once a substantially level powder layer 120 is established over the build surface 122, the controller 114 may send a signal 124 to the energy gun 108 that energizes a laser or electron beam device 134 and controls a directional mechanism 136 of the gun 108. The directional mechanism 136 may include a focusing lens that focuses a beam (see arrows 138) emitted from device 134 which, in-turn, may be deflected by an electromagnetic scanner or rotating mirror of the mechanism 136 so that the energy beam 138 selectively and controllably impinges upon selected regions of the top layer 120 of the powder bed 104. The beam 138 moves along the layer 120 melting region-by-regions of the layer 120 at a controlled rate and power, melting each region into pools that then form with, or sinter to, the adjacent build surface 122, solidify, and ultimately form the next top slice 118. The process then repeats itself where another powder layer 120 is spread over the last solidified slice 118 and the energy gun 108 melts at least a portion of that layer along with a meltback region (i.e. sintering) of the previously solidified slice 118 to form a uniform and homogeneous assembly 20, or portion thereof.

It is understood that relative positional terms such as "forward," "aft," "upper," "lower," "above," "below," and the like are with reference to the normal operational attitude and should not be considered otherwise limiting. It is also understood that like reference numerals identify corresponding or similar elements throughout the several drawings. It should be understood that although a particular component arrangement is disclosed in the illustrated embodiment, other arrangements will also benefit. Although particular step sequences may be shown, described, and claimed, it is understood that steps may be performed in any order, separated or combined unless otherwise indicated and will still benefit from the present disclosure.

The foregoing description is exemplary rather than defined by the limitations described. Various non-limiting embodiments are disclosed; however, one of ordinary skill in the art would recognize that various modifications and variations in light of the above teachings will fall within the scope of the appended claims. It is therefore understood that within the scope of the appended claims, the disclosure may be practiced other than as specifically described. For this reason, the appended claims should be studied to determine true scope and content.

## Claims

1. A fuel nozzle (20‴) for a gas turbine engine, the fuel nozzle (20‴) comprising:
an additive manufactured first tube (56"');
an additive manufactured second tube (58‴) connected to the first tube (56‴) and manufactured as one unitary piece, wherein the first tube (56‴) is surrounded by and substantially co-extends with the second tube (58‴);
an additive manufactured third tube (98) co-extending with the first tube (56‴) and surrounded by the second tube (58‴), with the second tube (58‴) spaced radially outward from the first (56‴) and third tubes (98), wherein the third tube is manufactured as one unitary piece to the first and second tubes;
an additive manufactured support structure (88) engaged between the first and second tubes, wherein a generally annular void (60) is defined by and between the first and second tubes, and the support structure (88) is a plurality of pylons (92, 94) spaced from one-another in the void (60), the void (60) is sealed for thermally insulating a fluid flowing through the first tube (56), and the void is sealed under negative atmosphere pressure; and
a pressure maintenance feature (86) attached to the second tube (58‴) for maintaining the negative atmospheric pressure in the void (60), wherein the pressure maintenance feature (86) is supported by and communicates through the second tube (58‴).

2. The fuel nozzle (20‴) set forth in claim 1, wherein the first tube (56‴) is substantially concentric to the second tube (58‴).

3. The fuel nozzle (20‴) set forth in claim 1 or 2, wherein the first and second tubes co-extend along a centerline having at least one bend (54).

## Patentansprüche

1. Treibstoffdüse (20‴) für ein Gasturbinentriebwerk, wobei die Treibstoffdüse (20‴) Folgendes umfasst:
ein additiv gefertigtes erstes Rohr (56‴);
ein additiv gefertigtes zweites Rohr (58‴),welches mit dem ersten Rohr (56‴) verbunden ist und als ein einheitliches Stück gefertigt ist, wobei das erste Rohr (56‴) durch das zweite Rohr (58‴) umgeben ist und sich im Wesentlichen in gleicher Richtung wie dieses erstreckt;
ein additiv gefertigtes drittes Rohr (98), welche sich in gleicher Richtung wie das erste Rohr (56‴) erstreckt und durch das zweite Rohr (58‴) umgeben ist, wobei das zweite Rohr (58‴) radial nach außen von dem ersten (56‴) und dem dritten Rohr (98) beabstandet ist, wobei das dritte Rohr (98) als ein einheitliches Stück an das erste und zweite Rohr gefertigt ist;
eine additiv gefertigte Stützstruktur (88), welche zwischen dem ersten und dem zweiten Rohr eingreift, wobei eine im Allgemeinen ringförmige Lücke (60) durch das erste und das zweite Rohr und zwischen diesen definiert ist, wobei die Stützstruktur (88) eine Vielzahl von Pylonen (92, 94) ist, welche in der Lücke (60) voneinander beabstandet sind, wobei die Lücke (60) abgedichtet ist, um ein Fluid thermisch zu isolieren, welches durch das erste Rohr (56) strömt, und wobei die Lücke unter negativem Atmosphärendruck abgedichtet ist; und
wobei ein Druckerhaltungsmerkmal (86) an dem zweitem Rohr (58‴) befestigt ist, um den negativen atmosphärischen Druck in der Lücke (60) zu erhalten, wobei das Druckerhaltungsmerkmal (86) durch das zweite Rohr (58‴) gestützt wird und durch dieses kommuniziert.

2. Treibstoffdüse (20‴) nach Anspruch 1, wobei das erste Rohr (56‴) im Wesentlichen konzentrisch zu dem zweiten Rohr (58‴) ist.

3. Treibstoffdüse (20‴) nach Anspruch 1 oder 2, wobei sich das erste und das zweite Rohr entlang einer Mittellinie in gleicher Richtung erstrecken, welche mindestens eine Biegung (54) aufweist.

## Revendications

1. Injecteur de carburant (20‴) pour un moteur à turbine à gaz, l'injecteur de carburant (20‴) comprenant :
un premier tube (56‴) fabriqué de manière additive ;
un second tube (58‴) fabriqué de manière additive, connecté au premier tube (56‴) et fabriqué en une seule pièce, dans lequel le premier tube (56‴) est entouré par le deuxième tube (58‴) et s'étend sensiblement conjointement avec celui-ci ;
un troisième tube (98) fabriqué de manière additive s'étendant conjointement avec le premier tube (56‴) et entouré par le deuxième tube (58‴), le deuxième tube (58‴) étant espacé radialement vers l'extérieur des premier (56‴) et troisième tubes (98), dans lequel le troisième tube (98) est fabriqué en une seule pièce avec les premier et deuxième tubes ;
une structure de support (88) fabriquée de manière additive venant en prise entre les premier et deuxième tubes, dans lequel un vide généralement annulaire (60) est défini par et entre les premier et deuxième tubes, et la structure de support (88) est une pluralité de pylônes (92, 94) espacés les uns des autres dans le vide (60), le vide (60) est scellé pour isoler thermiquement un fluide circulant à travers le premier tube (56), et le vide est scellé sous pression atmosphérique négative ; et
un dispositif de maintien de pression (86) fixé au deuxième tube (58‴) pour maintenir la pression atmosphérique négative dans le vide (60), dans lequel le dispositif de maintien de pression (86) est supporté par le second tube (58‴) et communique à travers celui-ci.

2. Injecteur de carburant (20‴) selon la revendication 1, dans lequel le premier tube (56‴) est sensiblement concentrique au second tube (58‴).

3. Injecteur de carburant (20‴) selon la revendication 1 ou 2, dans lequel les premier et second tubes s'étendent conjointement le long d'une ligne médiane ayant au moins un coude (54).
